# EUROPÄISCHE PATENTSCHRIFT

(11) **EP 2 620 320 B1**
(45) Veröffentlichungstag und Bekanntmachung des Hinweises auf die Patenterteilung: **14.06.2017**
(21) Anmeldenummer: 13152157.7
(22) Anmeldetag: 22.01.2013
(51) Int. Cl.: B60N 2/56, B60N 2/427

(54) **Fahrzeugsitz mit einer integrierten Heizung für den Nacken- und/oder Kopfbereich**
Vehicle seat with integrated heating for the neck and/or head area
Siège de véhicule avec un chauffage intégré pour la zone du cou et/ou de la tête

(30) Priorität: 24.01.2012 DE 102012001176; 06.07.2012 DE 102012013609
(43) Veröffentlichungstag der Anmeldung: 31.07.2013
(73) Patentinhaber: Johnson Controls GmbH, 51399 Burscheid (DE)
(72) Erfinder: Günther, Benjamin, 42669 Solingen (DE)
(74) Vertreter: Siekmann, Gunnar

(56) Entgegenhaltungen:
- DE-A1- 10 046 216
- DE-A1-102006 031 260
- DE-A1-102009 035 776
- DE-A1-102009 058 890
- DE-U1- 20 104 173

## Beschreibung

Die Erfindung betrifft einen Fahrzeugsitz mit einer integrierten Heizung für den Nacken- und/oder Kopfbereich mit einem Gehäuse zur Leitung der erwärmten Luft, wobei zumindest ein Teil des Gehäuses unter Krafteinwirkung ortsveränderlich ist und das Gehäuse aus mehreren Elementen aufgebaut ist. Die Luft wird dabei in den Nacken- und/oder Kopfbereich eines Benutzers des Fahrzeugsitzes geleitet. Weiterhin betrifft die Erfindung eine Heizung für einen derartigen Fahrzeugsitz.

Die Heizung weist typischerweise ein Gebläse, Heizelemente und ein Gehäuse mit Luftleitfunktion auf, mit dem die erwärmte Luft innerhalb des Fahrzeugsitzes zu dem gewünschten Austrittsbereich geführt wird. Das Gehäuse endet dabei typischerweise kurz hinter dem Bezug des Fahrzeugsitzes und stellt daher eine zu berücksichtigende Größe für eventuelle Verletzungen im Nacken- und Kopfbereich dar.

Ein Fahrzeugsitz der eingangs genannten Art ist aus der DE 100 46 216 A1 bekannt. Dort ist in der Nackenstütze eines Fahrzeugsitzes eine Zusatzheizeinrichtung vorgesehen. In die Nackenstütze ist ein Infrarotstrahler eingebaut, der aus einem Reflektor und einer Halogenlampe besteht. Zur Kühlung des Reflektors und/oder der Halogenlampe ist ein Kühlluftkanal vorgesehen. Die Anordnung von Infrarotstrahler und Kühlluftkanal in der Nackenstütze wird so gewählt, dass in einem Belastungsfall die gesamte Einheit, also die gesamte Nackenstütze, leicht nach hinten ausschwenken kann, um den Kopf-, Schulter- und Nackenbereich des Passagiers im Crashfall nicht zu verletzen.

Aus der DE 10 2006 031 260 A1 ist eine Vorrichtung zur Ausströmung von Luft für einen Sitz in ein Kraftfahrzeug, insbesondere für ein Cabriofahrzeug, bekannt. Es soll warme Luft im Nacken der den Sitz benutzenden Person ausgeströmt werden. Die Luft strömt aus einer Luftauslassöffnung, die mit Überständen an der Oberfläche des Sitzes gehalten ist. An die Luftauslassöffnung schließt sich eine Luftführungsleitung an. Zwischen der Luftauslassöffnung und der Luftführungsleitung ist ein Faltenbalg vorgesehen, der zum Ausgleich von Einbautoleranzen zwischen einer zugehörigen Druckerzeugungseinrichtung und der Luftauslassöffnung dient.

Die DE 201 04 173 U1 beschreibt ebenfalls eine Zusatzheizung in einem Kraftfahrzeug für den Kopf-, Nacken- und Schulterbereich eines Benutzers. Zwischen den Kopfstützenträgern erstreckt sich in Richtung der Vordersitze der Sitzrückenlehne ein teleskopisch verlängerbarer Druckstutzen, dessen äußeres Leitungsrohr gegenüber dem inneren Leitungsrohr mittels einer Klemmschraube in der jeweiligen Ausziehstellung arretierbar ist.

In der DE 10 2009 058 890 A1 ist eine Kopfstütze für ein Kraftfahrzeug beschrieben. In der Kopfstütze ist eine Luftversorgungseinrichtung zum Wärmen oder Kühlen des Kopf-, Nacken- und Schulterbereichs vorgesehen. Über einen in Fahrtrichtung angeordneten Lüftungskanal wird die Luft durch einen Lüfter angesaugt. Der Lüfter verteilt die Luft in einer Luftführungsschicht, die an einen Schaumkern angrenzend angeordnet ist.

Eine weitere Luftversorgungseinrichtung ist in der DE 10 2009 035 776 A1 offenbart. Diese weist ein Heizelement mit einem Gebläse auf.

Ein weiterer Kraftfahrzeugsitz ist beispielsweise in der WO 2007/012470 A1 beschrieben.

Der Erfindung liegt daher die Aufgabe zugrunde, einen Fahrzeugsitz der eingangs genannten Art zu schaffen, der hinsichtlich der Vermeidung von Verletzungen optimiert ist. Die Lösung dieser Aufgabe erfolgt mit einem Fahrzeugsitz mit den Merkmalen des Patentanspruchs 1. Vorteilhafte Weiterbildungen der Erfindung sind in den Unteransprüchen beschrieben.

Bei einem erfindungsgemäßen Fahrzeugsitz mit einer integrierten Heizung für den Nacken- und/oder Kopfbereich mit einem Gehäuse zur Leitung der erwärmten Luft, wobei zumindest ein Teil des Gehäuses unter Krafteinwirkung ortsveränderlich ist und das Gehäuse aus mehreren Elementen aufgebaut ist, ist vorgesehen, dass zumindest der Teil des Gehäuses relativ zum Fahrzeugsitz unter Krafteinwirkung ortsveränderlich ist, der unmittelbar an die Sitzfläche des Fahrzeugsitzes oder die Oberfläche der Kopfstütze des Fahrzeugsitzes angrenzt. Durch eine solche Ausgestaltung können Halswirbelsäulenverletzungen, Schleudertraumata sowie Verletzungen des Wirbelsegments T1 bei Beschleunigungsverletzungen vermieden oder zumindest reduziert werden.

Das Gehäuse zur Leitung der erwärmten Luft ist dabei bevorzugt im Lehnenbereich des Fahrzeugsitzes eingebaut. Denkbar ist auch eine Ausführungsform, bei der das Gehäuse in der Kopfstütze angeordnet ist.

Das Gehäuse ist erfindungsgemäß aus mehreren Elementen aufgebaut. Bevorzugt weist das Gehäuse einen Ausströmer und einen Luftkanal und gegebenenfalls weitere Bestandteile auf. Der Luftkanal selbst kann aus mehreren Elementen zusammengesetzt sein.

Erfindungsgemäß wird gerade der Teil des Gehäuses ortsverändert, der unmittelbar an die Sitzoberfläche oder die Oberfläche der Kopfstütze des Fahrzeugsitzes angrenzt und daher als erstes Kontakt mit dem Benutzer hat.

In einer ersten Ausführungsform der Erfindung ist zumindest der dem Benutzer nächste Teil des Gehäuses derart ausgestaltet, dass dieses bei Krafteinwirkung eine Formänderung erfährt. Dies kann durch die Verwendung von Materialien erzielt werden, die sich bei entsprechenden Aufschlagkräften verändern. Bevorzugt werden Materialien oder Strukturen verwendet, die bei Kräften unterhalb von 1000 N eine Formänderung erfahren. In einer erfindungsgemäßen Ausführungsform weisen Teile des Gehäuses Knickstellen oder Sollbruchstellen auf, durch die eine Formänderung erfolgt. Bevorzugt ist insbesondere der Ausströmer des Gehäuses Gegenstand einer solchen Formänderung. Dabei kann der Ausströmer durch Klemmung, Formschluss, Vernähen oder mit einer anderen Befestigungsform in dem Kraftfahrzeugsitz befestigt sein. Bevorzugt ist der Ausströmer zusätzlich im Schaumsystem gelagert. Die Formänderung kann dabei reversibel oder irreversibel erfolgen. Eine reversible Veränderung kann in einer erfindungsgemäßen Ausführungsform dadurch erreicht werden, dass der Ausströmer oder ein anderer Abschnitt des Gehäuses in einem Ringbereich aus einem gummiartigen oder elastischen Material oder aus einem kompressiblen Material oder einer kompressiblen Struktur, z.B. einer Spiralfeder, hergestellt ist.

In einer zweiten Ausführungsform der Erfindung erfolgt die Ortsveränderung von zumindest Teilen des Gehäuses dadurch, dass einzelne Teile des Gehäuses bei Krafteinwirkung ihre Lage verändern. Die einzelnen Teile sind dabei aus Materialien hergestellt, die bei Beaufschlagung von Kräften unterhalb von 1000 N keine wesentliche Formveränderung erfahren. Einzelne Elemente des Gehäuses, z.B. der Ausströmer und der Kanal sind relativ zueinander linear oder rotatorisch verschieblich ausgebildet. Bevorzugt können diese teleskopartig ineinander gleiten.

In einer dritten Ausführungsform, die jedoch nicht erfindungsgemäß ist, wird das Gehäuse mit mehreren einzelnen Teilen insgesamt linear oder rotatorisch ortsverändert. Bevorzugt erfolgt dabei eine horizontale Verschiebung des Gehäuses, insbesondere des Ausströmers und von großen Teilen des Luftkanals innerhalb des Kraftfahrzeugsitzes. In einer anderen bevorzugten Ausgestaltung erfolgt eine Verschwenkung des Gehäuses unter Krafteinwirkung. Der Drehpunkt liegt dabei bevorzugt im rückwärtigen Bereich des Kraftfahrzeugsitzes, um einen möglichst großen Schwenkweg des Ausströmers zu ermöglichen.

Bei den als zweite und dritte Ausführungsform beschriebenen Möglichkeiten sind bevorzugt einzelne Teile des Gehäuses zueinander bzw. das Gehäuse insgesamt federbeaufschlagt gelagert, so dass nach Wegfall der Krafteinwirkung auf das Gehäuse eine Rückstellung der Verschiebung in die ursprüngliche Lage erzielt wird. Weiterhin werden bevorzugt energieaufnehmende Einrichtungen eingebracht, die geeignet sind, die biomechanischen Kennwerte eines Insassen während eines Heckaufpralls positiv zu beeinflussen. Bevorzugt sind hierzu Rotations- oder Lineardämpferelemente vorgesehen, die die beim Aufprall bzw. Stoß entstehende Energie aufnehmen. In einer anderen bevorzugten Ausgestaltung sind die einzelnen Elemente des Gehäuses so zueinander ausgelegt, dass eine Reibung bevorzugt nur bei einer Bewegung aus der Ausgangslage heraus wirkt und bei der Rückstellung nicht wirkt, jedenfalls deutlich kleiner ist. Eine andere energieaufnehmende Einrichtung kann in einer progressiven Klemmung zwischen Einzelkomponenten des Gehäuses bestehen.
Ein weiterer Aspekt der Erfindung besteht in der Bereitstellung einer Heizung für den Nacken- und/oder Kopfbereich zum Einbau in einen oben beschriebenen Fahrzeugsitz. Unter dem Begriff Fahrzeug wird jedes sich bewegende Fahrzeug, insbesondere ein Kraftfahrzeug oder ein Flugzeug, verstanden.
Nachfolgend werden bevorzugte Ausführungsbeispiele der Erfindung anhand eines in der Zeichnung dargestellten Ausführungsbeispiels weiter erläutert. Im Einzelnen zeigen die schematischen Darstellungen in:
- Figur 1:: eine perspektivische Ansicht eines Teils eines Fahrzeugsitzes;
- Figur 2:: eine Seitenansicht des Fahrzeugsitzes gemäß Figur 1;
- Figur 3:: eine schematische Darstellung einer ersten Ausführungsform eines Gehäuses einer Heizung des erfindungsgemäßen Fahrzeugsitzes;
- Figur 4:: eine schematische Darstellung einer zweiten Ausführungsform eines Gehäuses für eine Heizung eines erfindungsgemäßen Fahrzeugsitzes;
- Figur 5:: eine schematische Darstellung einer dritten Ausführungsform eines Gehäuses einer Heizung eines erfindungsgemäßen Fahrzeugsitzes;
- Figur 6:: eine geschnittene Seitenansicht eines Fahrzeugsitzes mit einer weiteren Ausführungsform der Erfindung; und
- Figur 7:: eine geschnittene Seitenansicht eines Fahrzeugsitzes mit einer weiteren Ausführungsform der Erfindung.

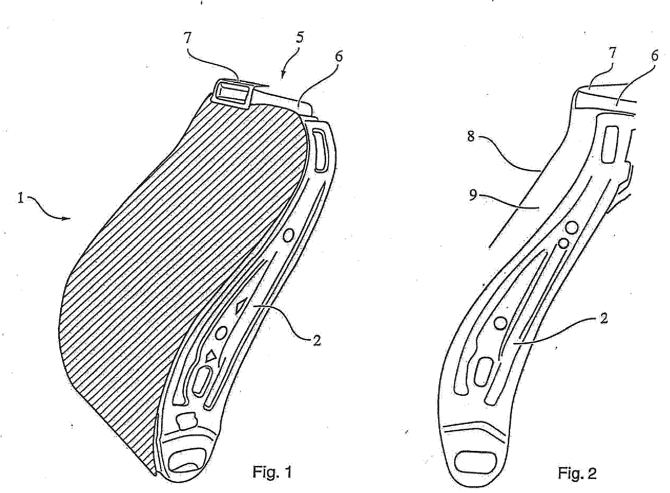

In Figur 1 ist eine perspektivische Ansicht eines Teils eines Fahrzeugsitzes 1 dargestellt. Insbesondere ist hier die Sitzstruktur 2 der Rückenlehne dargestellt. Innerhalb der Sitzstruktur 2 sind Heizelemente und ein Gebläse für die Heizung für den Nacken- und/oder Kopfbereich vorgesehen. Im oberen Bereich dieser Sitzstruktur 2 ist ein Gehäuse 5 zu Leitung der erwärmten Luft in den Nacken- und/oder Kopfbereich vorgesehen. Dieses Gehäuse 5 besteht hier aus einem Luftkanal 6 und einem Ausströmer 7.

Wie in Figur 2 in der Seitenansicht zu erkennen ist, stehen Teile des Luftkanals 6 und der Ausströmer 7 über die vordere Oberfläche der Sitzstruktur 2 hinaus. Dieser Bereich wird auch als ungünstiger Überstand bezeichnet, da insbesondere bei einem Heckaufprall eines anderen Kraftfahrzeugs der Insasse gegen den Kraftfahrzeugsitz, insbesondere die Rückenlehne, geschleudert wird und es gerade in diesem Bereich zu Halswirbelsäulenverletzungen oder Schleudertraumata kommen kann. Die Linie 8 bezeichnet die Sitzoberfläche. Zwischen der Sitzoberfläche 8 und der Sitzstruktur 2 ist die Polsterung 9 vorgesehen. Innerhalb dieser Polsterung 9 ist der Überstand des Gehäuses 5 zur Leitung der erwärmten Luft aufgenommen.

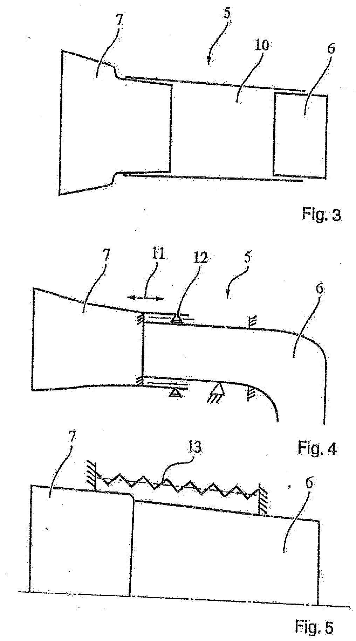

In Figur 3 ist eine bevorzugte erste Ausführungsform der Erfindung dargestellt. Das Gehäuse 5 weist hier einen Ausströmer 7 und einen Luftkanal 6 auf, der hier feststehend ausgebildet ist. Der Luftkanal ist hier jedoch mehrteilig ausgebildet. Ein direkt an den Ausströmer 7 anschließender Abschnitt 10 des Luftkanals ist hier kompressibel ausgebildet. Dieser Teil des Gehäuses 5 kann daher eine reversible Formänderung im Falle einer Krafteinwirkung durchführen. Der als kompressibler Kanal ausgebildete Abschnitt 10 kann z.B. eine Spiralfeder sein. Ebenso könnte dieser Abschnitt 10 aus einem Elastomer oder einem Gummimaterial gebildet sein.

In Figur 4 ist eine zweite Ausführungsform eines Gehäuses 5 dargestellt. Dort ist der Ausströmer 7 gegenüber dem feststehenden Luftkanal 6 verschieblich ausgebildet. Dazu erfolgt eine Bewegung des Ausströmers 7 in Richtung des Pfeils 11. Zwischen dem Luftkanal 6 und dem Ausströmer 7 sind Dichtungen 12 vorgesehen. Ausströmer 7 und Luftkanal 6 sind daher bei Krafteinwirkung teleskopartig zueinander verschiebbar und gleiten teleskopartig ineinander.

Bei der in Figur 5 gezeigten Ausführungsform sind Ausströmer 7 und Luftkanal 6 ebenfalls gegeneinander verschiebbar. Zusätzlich ist hier eine Druckfeder 13 vorgesehen, die einerseits am Ausströmer 7 und andererseits am Luftkanal 6 angreift. Die Druckfeder 13 hat hier einerseits die Wirkung eines Lineardämpfungselements, das im Fall eines Zusammenstoßes Energie aufnimmt. Bei entsprechender Auslegung der Druckfeder 13 kann dies eine gewünschte Änderung der biomechanischen Kennwerte erzeugen. Außerdem kann mit Hilfe der Druckfeder 13 erreicht werden, dass nach Ende der Krafteinwirkung der Ausströmer 7 wieder in die ursprüngliche Lage verschoben wird. Bei dieser und auch der in Figur 4 dargestellten Ausführungsform erfolgt eine Verschiebung verschiedener Elemente des Gehäuses 5 gegeneinander.

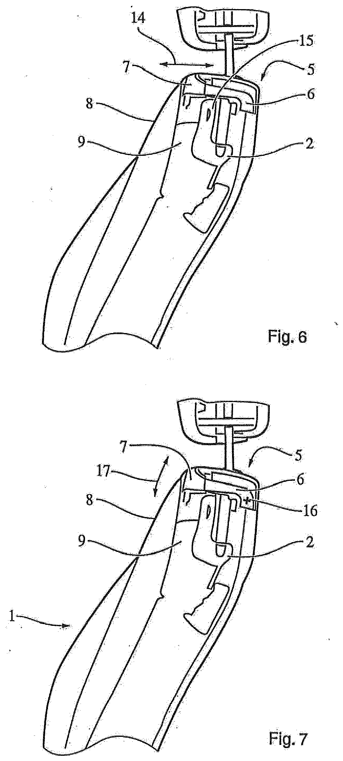

In Figur 6 ist in einer geschnittenen Seitenansicht eines Fahrzeugsitzes eine weitere Ausführungsform der Erfindung dargestellt, bei der eine Verschiebung des gesamten Gehäuses 5 erfolgt. Hier ist die Sitzoberfläche 8 dargestellt, unterhalb der der Ausströmer 7 endet. Der Ausströmer 7 ist zusammen mit dem Luftkanal 6 Teil des Gehäuses 5, mit dem die Luft aus der Heizung in den Nackenbereich geleitet wird. Das Gehäuse 5 ist hier insgesamt linear verschieblich gelagert. Das heißt, dass bei einem Aufprall eine Verschiebung in Richtung des Pfeils 14 erfolgt. Bei einem Aufprall, insbesondere einem Heckaufprall erfolgt eine Krafteinwirkung auf das Gehäuse 5, insbesondere den Ausströmer 7, so dass dieses nach hinten verschoben wird und etwa im Bereich der mit 15 bezeichneten Linie zum Stillstand kommt, da in dieser Position der untere Vorsprung des Ausströmers an die Sitzstruktur 2 anschlägt.

In Figur 7 ist eine weitere geschnittene Seitenansicht einer Rückenlehne eines Fahrzeugsitzes 1 dargestellt. Die Rückenlehne weist neben der Sitzstruktur 2 eine die Sitzstruktur 2 umgebende Polsterung 9 und eine Sitzoberfläche 8 auf. Unmittelbar hinter der Sitzoberfläche 8 ist im Nackenbereich der Ausströmer 7 als Teil des Gehäuses 5 positioniert. Bei der hier dargestellten Ausführungsform ist das Gehäuse 5, bestehend aus Luftkanal 6 und Ausströmer 7 um einen Schwenkpunkt 16 verschwenkbar. Der Schwenkpunkt 16 ist von der Sitzposition aus betrachtet hinter der Sitzstruktur 2 angeordnet. Auf diese Weise ist ein vergleichsweise großer Schwenkweg zwischen der Schwenkachse 16 und dem vorderen Ende des Ausströmers 7 vorhanden, so dass bei einer Schwenkbewegung in Richtung des Pfeils 17 ein vergleichsweise großer Schwenkweg möglich ist. Auch auf diese Weise ist eine Ortsveränderung des Gehäuses 5 unter Krafteinwirkung möglich.

## Patentansprüche

1. Fahrzeugsitz mit einer integrierten Heizung für den Nacken- und/oder Kopfbereich mit einem Gehäuse (5) zur Leitung der erwärmten Luft, wobei zumindest ein Teil des Gehäuses (5) unter Krafteinwirkung ortsveränderlich ist und das Gehäuse (5) aus mehreren Elementen aufgebaut ist und wobei der Teil des Gehäuses (5) relativ zum Fahrzeugsitz (1) ortsveränderlich ist, der unmittelbar an die Sitzfläche des Fahrzeugsitzes oder die Oberfläche der Kopfstütze des Fahrzeugsitzes angrenzt, **dadurch gekennzeichnet dass** Teile des Gehäuses (5) Knickstellen oder Sollbruchstellen aufweisen, durch die eine Formänderung erfolgt, oder
dass das Gehäuse (5) oder ein Teil des Gehäuses (5) aus einem gummiartigem oder elastischem Material besteht, das eine reversible Veränderung des Gehäuses ermöglicht oder,
dass eine Ortsveränderung von Teilen des Gehäuses (5) dadurch erfolgt, dass einzelne Teile des Gehäuses bei Krafteinwirkung ihre Lage verändern.

2. Fahrzeugsitz nach Anspruch 1, **dadurch gekennzeichnet, dass** das Gehäuse zur Leitung der erwärmten Luft im Lehnenbereich des Fahrzeugsitzes eingebaut ist.

3. Fahrzeugsitz nach einem der Ansprüche 1 oder 2, **dadurch gekennzeichnet, dass** das Gehäuse (5) zur Leitung der erwärmten Luft in der Kopfstütze angeordnet ist.

4. Fahrzeugsitz nach einem der vorhergehenden Ansprüche, **dadurch gekennzeichnet, dass** das Gehäuse einen Ausströmer (7) und einen Luftkanal (6) aufweist.

5. Fahrzeugsitz nach Anspruch 4, **dadurch gekennzeichnet, dass** der Luftkanal aus mehreren Elementen zusammengesetzt ist.

6. Heizung für den Nacken- und/oder Kopfbereich zur Integration in einen Fahrzeugsitz, mit einem Gehäuse (5) zur Leitung der erwärmten Luft, wobei zumindest ein Teil des Gehäuses (5) unter Krafteinwirkung ortsveränderlich ist und das Gehäuse (5) aus mehreren Elementen aufgebaut ist, **dadurch gekennzeichnet, dass** der Teil des Gehäuses (5) relativ zum Fahrzeugsitz (1) ortsveränderlich ist, der unmittelbar an die Sitzfläche des Fahrzeugsitzes oder die Oberfläche der Kopfstütze des Fahrzeugsitzes angrenzend anordbar ist und dass Teile des Gehäuses (5) Knickstellen oder Sollbruchstellen aufweisen,durch die eine Formänderung erfolgt, oder dass das Gehäuse (5) oder ein Teil des Gehäuses (5) aus einem gummiartigem oder elastischem Material besteht, das eine reversible Veränderung des Gehäuses ermöglicht, oder dass eine Ortsveränderung von Teilen des Gehäuses (5) dadurch erfolgt, dass einzelne Teile des Gehäuses bei Krafteinwirkung ihre Lage verändern.

## Claims

1. A vehicle seat with integrated heating for the neck and/or head area, featuring a housing (5) for conveying the heated air, wherein the location of at least part of the housing (5) can be changed under the influence of a force and the housing (5) is composed of multiple elements, and wherein the part of the housing (5), which directly borders on the seat surface of the vehicle seat or the surface of the headrest of the vehicle seat, can be changed with respect to its location relative to the vehicle seat (1), **characterized in**
**that** parts of the housing (5) feature bending points or predetermined breaking points, by means of which a shape change is realized, or
**that** the housing (5) or part of the housing (5) consists of a rubber-like or elastic material, which allows a reversible change of the housing, or
**that** a change in location of parts of the housing (5) is realized in that individual parts of the housing change their position under the influence of a force.

2. The vehicle seat according to claim 1, **characterized in that** the housing for conveying the heated air is installed in the backrest area of the vehicle seat.

3. The vehicle seat according to one of claims 1 or 2, **characterized in that** the housing (5) for conveying the heated air is arranged in the headrest.

4. The vehicle seat according to one of the preceding claims, **characterized in that** the housing features an air outlet (7) and an air duct (6).

5. The vehicle seat according to claim 4, **characterized in that** the air duct is composed of multiple elements.

6. A heating arrangement for the neck and/or head area designed for integration into a vehicle seat, featuring a housing (5) for conveying the heated air, wherein the location of at least part of the housing (5) can be changed under the influence of a force and the housing (5) is composed of multiple elements, **characterized in that** the part of the housing (5), which can be arranged such that it directly borders on the seat surface of the vehicle seat or the surface of the headrest of the vehicle seat, can be changed with respect to its location relative to the vehicle seat (1), and **in that** parts of the housing (5) feature bending points or predetermined breaking points, by means of which a shape change is realized, or that the housing (5) or part of the housing (5) consists of a rubber-like or elastic material, which allows a reversible change of the housing, or that a change in location of parts of the housing (5) is realized **in that** individual parts of the housing change their position under the influence of a force.

## Revendications

1. Siège de véhicule avec un chauffage intégré pour la zone de la nuque et/ou de la tête, avec un boîtier (5) pour diriger l'air échauffé, au moins une partie du boîtier (5) étant déplaçable sous l'influence d'une force et le boîtier (5) étant constitué de plusieurs éléments et la partie du boîtier (5) qui est directement adjacente à l'assise du siège de véhicule ou à la surface de l'appuie-tête du siège de véhicule étant déplaçable par rapport au siège de véhicule (1), **caractérisé**
**en ce que** des parties du boîtier (5) comportent des points d'inflexion ou des points de rupture théorique qui donnent lieu à un changement de forme ou
**en ce que** le boîtier (5) ou une partie du boîtier (5) est constitué(e) d'une matière caoutchouteuse ou élastique qui permet une modification réversible du boîtier ou
**en ce qu'**un déplacement de parties du boîtier (5) a lieu en ce que des parties isolées du boîtier changent de position sous l'effet d'une force.

2. Siège de véhicule selon la revendication 1, **caractérisé en ce que** le boîtier (5) pour diriger l'air échauffé est monté dans la zone du dossier du siège de véhicule.

3. Siège de véhicule selon la revendication 1 ou 2, **caractérisé en ce que** le boîtier (5) pour diriger l'air échauffé est placé dans l'appuie-tête.

4. Siège de véhicule selon l'une quelconque des revendications précédentes, **caractérisé en ce que** le boîtier comporte un diffuseur (7) et un canal d'air (6).

5. Siège de véhicule selon la revendication 4, **caractérisé en ce que** le canal d'air est assemblé à partir de plusieurs éléments.

6. Chauffage pour la zone de la nuque et/ou de la tête, destiné à être intégré dans un siège de véhicule, avec un boîtier (5) pour diriger l'air échauffé, au moins une partie du boîtier (5) étant déplaçable sous l'effet d'une force et le boîtier (5) étant constitué de plusieurs éléments, **caractérisé en ce que** la partie du boîtier (5) qui est peut être placée en étant directement adjacente à l'assise du siège de véhicule ou à la surface de l'appuie-tête du siège de véhicule est déplaçable par rapport au siège de véhicule (1) et **en ce que** des parties du boîtier (5) comportent des points d'inflexion ou des points de rupture théorique qui donnent lieu à un changement de forme ou **en ce que** le boîtier (5) ou une partie du boîtier (5) est constitué(e) d'une matière caoutchouteuse ou élastique qui permet une modification réversible du boîtier ou en ce qu'un déplacement de parties du boîtier (5) a lieu **en ce que** des parties isolées du boîtier changent de position sous l'effet d'une force.
